(19) Europäisches Patentamt
European Patent Office
Office européen des brevets

(11) **EP 3 156 964 A1**

(12) **EUROPEAN PATENT APPLICATION**
published in accordance with Art. 153(4) EPC

(43) Date of publication:
**19.04.2017 Bulletin 2017/16**

(21) Application number: **15810538.7**

(22) Date of filing: **12.06.2015**

(51) Int Cl.:
**G06Q 50/20** (2012.01)   **G06Q 10/10** (2012.01)
**G06Q 30/02** (2012.01)   **G06Q 30/06** (2012.01)

(86) International application number:
**PCT/KR2015/005944**

(87) International publication number:
**WO 2015/194799 (23.12.2015 Gazette 2015/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **16.06.2014 KR 20140072956**

(71) Applicant: **Jung, Byung Hun
Seoul 137-843 (KR)**

(72) Inventor: **Jung, Byung Hun
Seoul 137-843 (KR)**

(74) Representative: **Gulde & Partner
Patent- und Rechtsanwaltskanzlei mbB
Wallstraße 58/59
10179 Berlin (DE)**

(54) **EDUCATIONAL CONTENT MANAGEMENT APPARATUS AND METHOD**

(57)      Provided is an educational content management method. The method comprising: inputting problems by receiving data that constructs a first problem from a terminal of a first user and receiving data that constructs a second problem from a terminal of a second user; inputting a problem set by receiving a designation signal for constructing a first problem set that includes the first problem and the second problem from a terminal of a third user; and distributing profits by distributing at least parts of sales profits of the first problem set to the first user, the second user, and the third user, wherein the distributing profits distributes $ar^n$ (a=sales profits, r=profits distribution ratio) profits to a user having the n-order rights on the basis of the degree of order of the right using infinite geometric sequence, user who has input the data that constructs the problem has the primary rights, user who has created the problem set using the problem in which the user having the primary rights exits has the secondary rights, user who has created new problem set or new problem set library using problem set or problem set library in which user having the n-1-order rights exits has the n-order rights.

[FIG. 4]

EP 3 156 964 A1

## Description

### TECHNICAL FIELD

The present invention relates to an educational content management apparatus and method.

### BACKGROUND ART

Various pieces of educational content for learning and education, such as mathematical problems, commentaries on mathematics, English problems, English texts, and national language problems, have been made as the results of many hours and efforts that are put by persons. However, such problems, which are the fruits of many hours of efforts of the persons, may be illegally used and unlawfully shared in various forms, such as scanned documents and word files. In spite of such illegal use and unlawful sharing of problems, it is not actually easy for users who have created the problems to exercise their rights, such as copyrights, to the created problems.

### DISCLOSURE

### TECHNICAL PROBLEM

A subject to be achieved by the present invention is to provide an educational content management apparatus and method, which can distribute profits according to efforts and time that are put by users who have created problems and have selected good problems, separately from copyrights, and can seek activation of educational content in quality and quantity.

Specifically, a subject to be achieved by the present invention is to provide an educational content management apparatus and method, which can enable users who have input specific problems to easily acquire various rights, such as rights to obtain distributed profits for the specific problems.

Another subject to be achieved by the present invention is to provide an educational content management apparatus and method, which can facilitate management of users who have rights to specific problems.

Still another subject to be achieved by the present invention is to provide an educational content management apparatus and method, which can easily create a problem set that is composed of parts of input problems.

Still another subject to be achieved by the present invention is to provide an educational content management apparatus and method, which can enable users who have created a problem set to easily acquire various rights, such as rights to obtain distributed profits for the created problem set.

Still another subject to be achieved by the present invention is to provide an educational content management apparatus and method, which can make a user who has input a specific problem take at least a part of profits that have occurred due to purchase of the specific problem, and thus can seek to activate creation of various new problems.

Still another subject to be achieved by the present invention is to provide an educational content management apparatus and method, which can distribute profits that have occurred due to purchase of a problem set that is composed of parts of input problems between a user who has input the parts of the problems and a user who has created the problem set, and thus can achieve problem creation activation, problem verification effects, and good problem selection.

Still another subject to be achieved by the present invention is to provide an educational content management apparatus and method, which can be effectively applied to smart learning, electronic learning (e-learning), educational content distribution, educational content development, educational content input and/or electronic textbook activation.

Additional advantages, subjects, and features of the invention will be set forth in part in the description which follows and in part will become apparent to those having ordinary skill in the art upon examination of the following or may be learned from practice of the invention.

### TECHNICAL SOLUTION

According to an aspect of the inventive concept, there is provided a educational content management apparatus and method including: a problem receiving unit configured to receive data that constructs a first problem from a terminal of a first user, and to receive data that constructs a second problem from a terminal of a second user; a problem set receiving unit configured to receive a designation signal for constructing a first problem set that includes the first problem and the second problem from a terminal of a third user; and a profit distribution unit configured to distribute at least parts of sales profits of the first problem set to the first user, the second user, and the third user.

The problem set receiving unit may receives a designation signal for constructing a second problem set that includes at least a part of the first problem set from a terminal of a fourth user, and the profit distribution unit distributes at least parts of sales profits of the second problem set to the first user, the second user, the third user, and the fourth user.

The educational content management apparatus may further comprising a library receiving unit configured to receive a designation signal for constructing a problem set library that includes the first problem set and the second problem set from a fifth user, wherein the profit distribution unit distributes at least parts of sales profits of the problem set library to the first user, the second user, the third user, the fourth user, and the fifth user.

The problem receiving unit may receives data that constructs a solution of the first problem from a terminal of a sixth user, and if the data that constructs the solution of the first problem is included in the first problem set, the profit distribution unit distributes at least parts of the sales profits of the problem set to the first user, the second user, the third user, the fourth user, and the sixth user.

The educational content management apparatus may further comprising: a storage unit configured to store the data that constructs the problem that is received by the problem receiving unit; a search condition receiving unit configured to receive an input of a search condition from a specific user; and a providing unit configured to provide information that coincides with the input search condition among the data that constructs the problem that is stored in the storage unit to a terminal of the specific user.

The providing unit may provides an interface that can create a problem set through selection of a part of a problem that coincides with the search condition to the specific user.

The storage unit may further stores information on a time when the data that constructs the problem is received and information on a user who has sent the data that constructs the problem.

The educational content management apparatus may further comprising a providing unit configured to provide a whole or a part of the problems included in the first problem set to a terminal of a user who has requested a preview in the case where the preview is requested before the first problem set is sold.

The profit distribution unit may distributes at least parts of the sales profits to the first user, the second user, and the third user using an infinite geometric sequence.

The first problem comprises at least one of an image and a moving image that are generated by a terminal of a seventh user, and if sales profits of at least one of the first problem and the first problem set occur, the profit distribution unit distributes at least a part of the sales profits to the seventh user.

The solution of the first problem may comprises at least one of an image and a moving image that are created by a terminal of a seventh user, and the profit distribution unit distributes at least a part of the sales profits of the first problem set to the first user, the second user, the third user, the fourth user, and the seventh user.

According to another aspect of the inventive concept, Educational content management apparatus comprising: a problem receiving unit configured to receive data that constructs two or more problems from a terminal of a first user; a problem set receiving unit configured to receive a designation signal for constructing a first problem set that includes at least two problems among the two or more problems from a terminal of a second user; and a profit distribution unit configured to distribute at least parts of sales profits of the first problem set to the first user and the second user.

The problem set receiving unit may receives a designation signal for constructing a second problem set that includes at least a part of the first problem set from a terminal of a third user, and the profit distribution unit distributes at least parts of sales profits of the second problem set to the first user, the second user, and the third user.

The educational content management apparatus may further comprising a library receiving unit configured to receive a designation signal for constructing a problem set library that includes the first problem set and the second problem set from a fourth user, wherein the profit distribution unit distributes at least parts of sales profits of the problem set library to the first user, the second user, the third user, and the fourth user.

The profit distribution unit may distributes at least parts of the sales profits to the first user, the second user, and the third user using an infinite geometric sequence.

According to another aspect of the inventive concept, an educational content management method comprising: inputting problems by receiving data that constructs a first problem from a terminal of a first user and receiving data that constructs a second problem from a terminal of a second user; inputting a problem set by receiving a designation signal for constructing a first problem set that includes the first problem and the second problem from a terminal of a third user; and distributing profits by distributing at least parts of sales profits of the first problem set to the first user, the second user, and the third user.

The inputting a problem set may receives a designation signal for constructing a second problem set that includes at least a part of the first problem set from a terminal of a fourth user, and the distributing profits distributes at least parts of sales profits of the second problem set to the first user, the second user, the third user, and the fourth user.

The educational content management method may further comprising inputting a library by receiving a designation signal for constructing a problem set library that includes the first problem set and the second problem set from a fifth user, wherein the distributing profits distributes at least parts of sales profits of the problem set library to the first user, the second user, the third user, the fourth user, and the fifth user.

According to another aspect of the inventive concept, An educational content management method comprising: inputting problems by receiving data that constructs two or more problems from a terminal of a first user; inputting a problem set by receiving a designation signal for constructing a first problem set that includes at least two problems among the two or more problems from a terminal of a second user; and distributing profits by distributing at least parts of sales profits of the first problem set to the first user and the second user.

The inputting a problem set may further receives a designation signal for constructing a second problem set that includes at least a part of the first problem set from a terminal of a third user, and the distributing profits distributes at least parts of sales profits of the second problem set to the first user, the second user, and the third user.

The educational content management method may further comprising inputting a library by receiving a designation signal for constructing a problem set library that includes the first problem set and the second problem set from a fourth user, wherein the distributing profits distributes at least parts of sales profits of the problem set library to the first user, the second user, the third user, and the fourth user.

The distributing profits distributes at least parts of the sales profits to the first user, the second user, and the third user using an infinite geometric sequence.

The inputting problems receives data that constructs a solution of the first problem from a terminal of a sixth user, and if the data that constructs the solution of the first problem is included in the first problem set, the distributing profits distributes at least parts of the sales profits of the problem set to the first user, the second user, the third user, the fourth user, and the sixth user.

The educational content management method may further comprising: storing the data that constructs the problem that is received through the receiving problems; receiving a search condition by receiving an input of the search condition from a specific user; and providing information, which coincides with the input search condition of the data that constructs the problem that is stored through the storing, to a terminal of the specific user.

The providing provides an interface that can create a problem set through selection of a part of a problem that coincides with the search condition to the specific user.

The storing further stores information on a time when the data that constructs the problem is received and information on a user who has sent the data that constructs the problem.

The educational content management method may further comprising providing a whole or a part of the problems included in the first problem set to a terminal of a user who has requested a preview in the case where the preview is requested before the first problem set is sold.

The distributing profits distributes at least parts of the sales profits to the first user, the second user, and the third user using an infinite geometric sequence.

The first problem comprises at least one of an image and a moving image that are generated by a terminal of a seventh user, and if sales profits of at least one of the first problem and the first problem set occur, the distributing profits distributes at least a part of the sales profits to the seventh user.

The solution of the first problem comprises at least one of an image and a moving image that are created by a terminal of a seventh user, and the distributing profits distributes at least a part of the sales profits of the first problem set to the first user, the second user, the third user, the fourth user, and the seventh user.

**ADVANTAGEOUS EFFECTS**

According to the aspect of the present invention, separately from copyrights, profits according to efforts and time that are put by users who have created problems and have selected good problems can be distributed, and activation of educational content in quality and quantity can be sought.

Specifically, users who have input specific problems can easily acquire various rights, such as rights to obtain distributed profits for the specific problems. Further, management of users who have rights to specific problems can be easily performed.

Further, according to the aspect of the present invention, a problem set that is composed of parts of input problems can be easily created, and various rights, such as rights to obtain distributed profits for the created problem set, can be easily acquired and managed.

Further, according to the aspect of the present invention, a user who has input a specific problem can take at least a part of profits that have occurred due to purchase of the specific problem, and thus it becomes possible to activate creation of various new problems.

Further, according to the aspect of the present invention, profits that have occurred due to purchase of a problem set that is composed of parts of input problems can be distributed between a user who has input the parts of the problems and a user who has created the problem set, and thus it becomes possible to achieve problem creation activation, problem verification effects, and good problem selection.

The effects of the present invention are not limited to the above-described effects, and other unmentioned effects will be clearly understood to those skilled in the art from the description of claims.

**DESCRIPTION OF DRAWINGS**

The above and other subjects, features and advantages of the present invention will be more apparent from the following detailed description taken in conjunction with the accompanying drawings, in which:

FIG. 1 is a diagram illustrating a system to which an educational content management apparatus according to an embodiment of the present invention is applied;
FIG. 2 is a block diagram of an educational content management apparatus according to an embodiment of the present invention is applied;
FIG. 3 is a diagram illustrating examples of problems, problem sets, and problem set libraries according to an embodiment of the present invention;
FIG. 4 is a flowchart illustrating an educational content management apparatus according to an embodiment of the present invention; and
FIG. 5 is a diagram illustrating the configuration of an educational content management apparatus that is different from the configuration of FIG. 2.

**BEST MODE FOR INVENTION**

Advantages and features of the inventive concept and methods of accomplishing the same may be understood more readily by reference to the following detailed description of exemplary embodiments and the accompanying drawings. The inventive concept may, however, be embodied in many different forms and should not be construed as being limited to the embodiments set forth herein. Rather, these embodiments are provided so that this disclosure will be thorough and complete and will fully convey the concept of the invention to those skilled in the art, and the inventive concept will only be defined by the appended claims. Like reference numerals refer to like elements throughout the specification.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The terminology used herein is for the purpose of describing particular embodiments only and is not intended to be limiting of the inventive concept. As used herein, the singular forms "a", "an" and "the" are intended to include the plural forms as well, unless the context clearly indicates otherwise. It will be further understood that the terms "comprises" and/or "comprising," when used in this specification, specify the presence of stated components, steps, operations and/or elements, but do not preclude the presence or addition of one or more other components, steps, operations, elements and/or groups thereof.

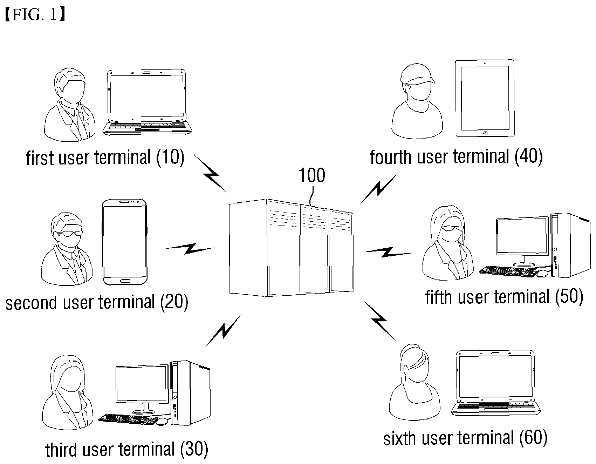

FIG. 1 is a diagram illustrating a system to which an educational content management apparatus according to an embodiment of the present invention is applied.

Referring to FIG. 1, a system, to which an educational content management apparatus 100 according to an embodiment of the present invention is applied, includes the educational content management apparatus 100 according to an embodiment of the present invention, and user terminals.

The user terminals may include one or more terminals, and referring to FIG. 1, may include, for example, first to sixth user terminals 10 to 60. Specifically, each of the user terminals that are included in the system, to which the educational content management apparatus 100 according to an embodiment of the present invention is applied, may mean a user terminal which is operated by a user, and is connected (or connectable) to the educational content management apparatus 100 according to an embodiment of the present invention by wire or wirelessly.

Further, the user terminal includes a device, such as a notebook computer, a desk top computer, a smart phone, or a tablet PC, which is connected to the educational content management apparatus 100 according to an embodiment of the present invention by wire or wirelessly to transmit/receive information to/from the apparatus 100.

Further, the user terminal includes a device, such as a keyboard, a touch screen, and/or a mouse, which can input information through an interface that is provided by the educational content management apparatus 100 according to an embodiment of the present invention.

The educational content management apparatus according to an embodiment of the present invention and the respective user terminals may transmit/receive data through a network.

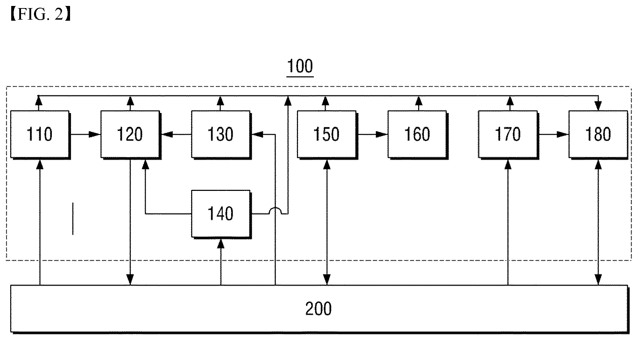

FIG. 2 is a block diagram of an educational content management apparatus according to an embodiment of the present invention is applied.

Referring to FIG. 2, the educational content management apparatus 100 according to this embodiment further includes a problem receiving unit 110, a problem set receiving unit 130, and a profit distribution unit 160, and may further include at least one of a storage unit 120, a library receiving unit 140, a payment unit 150, a search condition receiving unit 170, and a providing unit 180.

The educational content management apparatus 100 according to this embodiment may perform an educational content management method according to another embodiment of the present invention that includes a business model for educational content.

The problem receiving unit 110 may receive data that is composed of a problem from the user terminal.

The user terminal may receive at least one of a typing input, a mouse input, and a touch input for constructing problem data from a user.

The problem set receiving unit 130 may receive an input for creating a problem set through selection of parts of problems received by the problem receiving unit 110 from the user. That is, the problem set receiving unit 130 may receive a problem designation signal for constructing a problem set from the user terminal.

The problem set may mean one set that is created by selecting two or more of the problems (specifically, problems composed of data that constructs the problems received by the problem receiving unit 110) that are received by the problem receiving unit 110. Further, the problem set may mean one set that is created by selecting parts of at least one problem and at least one problem set.

In the present invention, the term "problem" is a question that requires an answer with respect to certain contents in order to help evaluating of the power of understanding and learning of the contents. For example, it may be a problem for a subject that is taught in a primary school, a middle school, a high school, or a university. Specifically, it may be a national language problem, a foreign language problem, a mathematical problem, a social problem, or a national history problem. In addition, in the present invention, the term "problem" may include objective and subjective questions in various fields, such as a question related to a national qualification certificate examination and a question related to getting employment.

Further, in the present invention, the term "problem" includes at least one of a question that requires an answer and a solution. That is, the "data that constructs the problem", which the problem receiving unit 110 has received from a specific user, may include only data related to a question that requires an answer, or only data related to a solution that includes an answer to a specific question. Further, the "data that constructs the problem" that the problem receiving unit 110 has received from a specific user may include a question that requires an answer and data that constructs a solution in all.

A question that requires an answer that may be included in a "problem" may include a text and an inquiry.

A question that requires an answer, a text, an inquiry, and/or a solution, which may be included in a "problem", may be presented by Korean and/or foreign language letters. Further, a question that requires an answer, a text, an inquiry, and/or a solution, which may be included in a "problem", may include an image, such as a picture or a photo. Further, a question that requires an answer, a text, an inquiry, and/or a solution, which may be included in a "problem", may include a moving image.

A user who has created an image and/or a moving image, which is included in the "problem", may be different from a user who has created other portions except for the image and/or the moving image, which is included in the "problem".

In the case of selling a specific problem to a specific user with a fee, the profit distribution unit 160 may distribute at least a part of sales profits to a user who has input the specific problem.

Further, in the case where a specific user purchases a specific problem set with a fee, the profit distribution unit 160 may distribute at least parts of sales profits to respective users who have input problems that are included in the specific problem set and a user who has created the specific problem set.

The profit distribution unit 160 may distribute a part of the sales profits to a manager who manages the educational content management apparatus 100 according to this embodiment.

Referring again to FIG. 1, the library receiving unit 140 may receive an input for creating a problem set library that includes at least two problem sets. The problem set library is created by designating problem sets other than problems. That is, the library receiving unit 140 may receive a signal for designating problem sets and may create a problem set library according to the received signal.

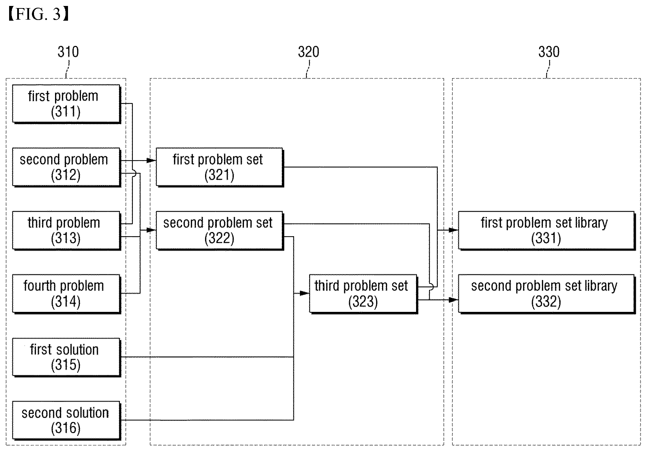

FIG. 3 is a diagram illustrating examples of problems, problem sets, and problem set libraries according to an embodiment of the present invention.

Referring to FIG. 3, a problem means a question that requires an answer that is input from a user and/or a solution related to the answer.

In FIG. 3, a problem pool 310 that is received by the problem receiving unit 110 includes a first problem 311, a second problem 312, a third problem 313, a fourth problem 314, a first solution 315, and a second solution 316. The first problem 311, the second problem 312, the third problem 313, and the fourth problem 314 are problems each of which includes both a question and a solution. The first solution 315 and the second solution 316 are problems each of which includes only a solution.

The first problem 311, the second problem 312, the third problem 313, the fourth problem 314, the first solution 315, and the second solution 316 may be input by different users, or one user may input plural problems and/or solutions.

Referring again to FIG. 3, a first problem set 321 is a problem set that is composed of the first problem 311, the second problem 312, and the third problem 313. If a specific user purchases the first problem set 321, he/she can get the effect of purchasing the first problem 311, the second problem 312, and the third problem 313.

A second problem set 322 is a problem set that is composed of the first problem 311, the third problem 313, and the fourth problem 314. If a specific user purchases the second problem set 322, he/she can get the effect of purchasing the first problem 311, the third problem 313, and the fourth problem 314.

A new problem set may be created by adding another problem to the problem set that has already been created or excluding any problem from the problem set that has already been created.

A third problem set 323 is a problem set that is composed of the first solution 315 and the second solution 316 in addition to the second problem set 322. If a specific user purchases the third problem set 323, he/she can get the effect of purchasing the first problem 311, the third problem 313, the fourth problem 314, the first solution 315, and the second solution 316.

A problem set library is composed of two or more problem sets.

If the problem set library is not composed of a specific problem set and another specific problem set, but is composed of one or more problems in addition to a specific problem set, it is not called a problem set library, but is called a problem set.

The first problem set library 331 is a problem set library that is composed of the first problem set 321 and the third problem set 323. If a specific user purchases the first problem set library 331, he/she can get the effect of purchasing the first problem 311, the second problem 312, the third problem 313, the fourth problem 314, the first solution 315, and the second solution 316.

The second problem set library 332 is a problem set library that is composed of the second problem set 322 and the third problem set 323. If a specific user purchases the second problem set library 331, he/she can get the effect of purchasing the first problem 311, the third problem 313, the fourth problem 314, the first solution 315, and the second solution 316.

The user who inputs problems and the user who creates problem sets and/or problem set libraries may be the same or may be different from each other.

Referring again to FIG. 2, the storage unit 120 may store problems (data that constructs the problems), problem sets (problem sets that are created using a designation signal for constructing problem sets), and/or problem set libraries (problem set libraries that are created using a designation signal for constructing problem set libraries), which are received by the problem receiving unit 110, the problem set receiving unit 130, and/or the problem set library receiving unit 140.

Further, the storage unit 120 may also store information on users who have input the problems, the problem sets, and/or the problem set libraries and information on input time.

Referring again to FIG. 2, if a specific user purchases a specific problem set library with a fee, the profit distribution unit 160 may distribute at least parts of sales profits to users who have made inputs (designation signals for constructing problem sets) for creating problem sets that are included in the specific problem set library, users who have input problems (questions that require answers and/or solutions) that are included in the respective problem sets, and a user who has made an input for creating the specific problem set library.

The payment unit 150 may perform a process in which a specific user purchases a specific problem, a specific problem set, and/or a specific problem set library with a fee.

The search condition receiving unit 170 may receive a search condition from a user.

For example, a user may input a search condition of a problem to be searched among problems, a search condition of a problem set to be searched among problem sets, and/or a search condition of a problem set library to be searched among problem set libraries, and the search condition receiving unit 170 may receive the search conditions from a user terminal. More specifically, the search conditions may be, for example, a subject title, a keyword included in a problem, a contents part corresponding to a problem, information on a user who has input a problem, and a purchase frequency with a fee.

The providing unit 180 may provide information that coincides with the search condition to the user terminal that has input the search condition.

Further, the providing unit 180 may provide various interfaces to the user terminal. Specifically, the providing unit 180 may provide a user with an interface for convenience of user's search condition input to the user terminal, an interface for problem input, an interface for problem selection, an interface for problem set creation, an interface for problem set selection, an interface for problem set library creation, an interface for problem set library selection, and/or an interface for purchase payment.

Further, if a user requests a preview before purchasing a problem, a problem set, and/or a problem set library, the providing unit 180 may provide the whole or a part of the problem, the problem set, and/or the problem set library, which are selected to be purchased by the user.

The respective constituent elements of FIG. 2 may mean software or hardware, such as FPGA (Field-Programmable Gate Array) or ASIC (Application-Specific Integrated Circuit). However, the above constituent elements are not limited to the software or hardware, but may be configured to be in an addressable storage medium or may be configured to execute one or more processors. Functions that are provided in the constituent elements may be implemented by further sub-divided constituent elements, and may be implemented by one constituent element through addition of a plurality of constituent elements to perform specific functions.

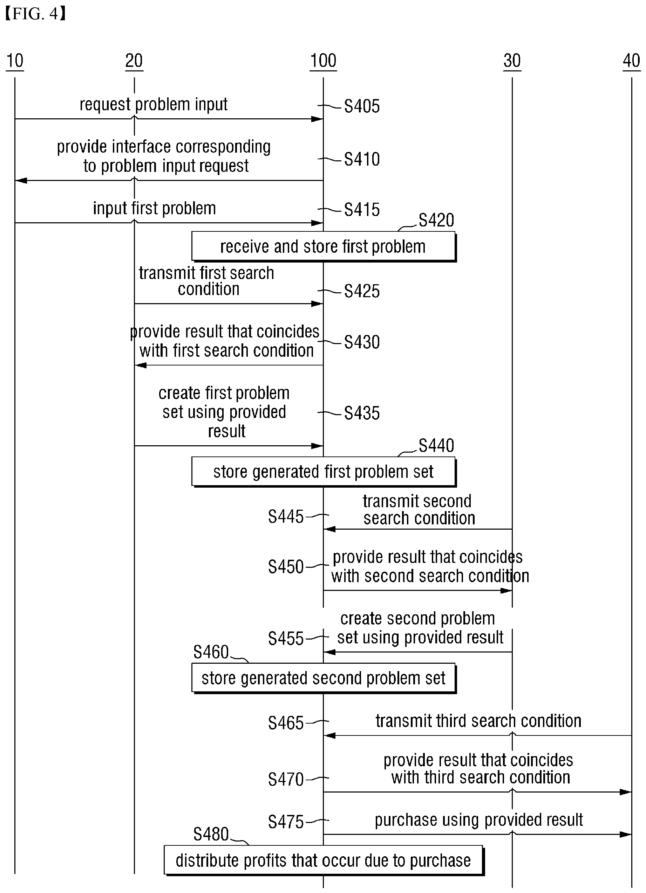

FIG. 4 is a flowchart illustrating an educational content management apparatus according to an embodiment of the present invention.

Hereinafter, an educational content management method according to this embodiment will be described. In order to help understanding of the explanation, it is exemplified that a first user terminal 10 transmits data that constructs a first problem, a second user terminal 20 transmits a designation signal for constructing a first problem set including the first problem, a third user terminal 30 transmits a designation signal for constructing a second problem set including the first problem, and a fourth user purchases content with a fee through a fourth user terminal 40.

The first user terminal 10 requests the educational content management apparatus 100 according to an embodiment of the present invention to provide a problem input (S405).

The educational content management apparatus 100 may provide an interface for the problem input to the first user terminal 10 in response to a problem input request from the first user terminal 10 (S410).

The first user terminal 10 may input the first problem through the provided interface for the problem input (S415).

The educational content management apparatus 100 may receive data that constructs the first problem, and may store the received data that constructs the first problem (S420).

The educational content management apparatus 100 may receive a first search condition from the second user terminal 20 (S425), and may provide information that coincides with the first search condition (e.g., information on a problem that coincides with the first search condition) to the second user terminal 20 (S430).

Examples of search conditions may be a subject title, a keyword included in a problem, a contents part corresponding to a problem, information on a user who has input a problem, and a purchase frequency with a fee.

The second user terminal 20 may transmit a designation signal for constructing the first problem set using the provided result (S435). The educational content management apparatus 100 may receive the designation signal for constructing the first problem set from the second user terminal 20.

Hereinafter, various cases in which the first problem set is created will be described.

As a first embodiment, the first problem set that includes two or more of the problems that coincide with the search condition may be created. As a second embodiment, the first problem set that includes at least one of the problems that coincide with the search condition and at least one of the problem sets that coincide with the search condition may be created. As a third embodiment, one of the problem sets that coincide with the search condition may be selected, and the first problem set may be created through exclusion of partial problems in the selected problem set. As a fourth embodiment, the first problem set may be created, which excludes the partial problems in the selected problem set after selection of the at least one of the problem sets that coincide with the search condition, and includes at least one of the problems that coincide with the search condition.

To help understanding of the explanation, it is assumed that the first problem is included in the first problem set.

The educational content management apparatus 100 may store the created first problem set.

If the third user terminal 30 transmits a second search condition (S445), the educational content management apparatus 100 receives the second search condition.

The educational content management apparatus 100 provides information that coincides with the second search condition to the third user terminal 30 (S450).

In a similar manner to that as described above at S435, the third user terminal 30 transmits a designation signal for constructing the second problem set to the educational content management apparatus 100 using the information that is provided from the providing unit 180 (S455). The educational content management apparatus 100 receives the designation signal for constructing the second problem set from the third user terminal 30.

The educational content management apparatus 100 stores the second problem set (S460).

The educational content management apparatus 100 receives a third search condition that is transmitted from the fourth user terminal 40 (S465).

The educational content management apparatus 100 provides information that coincides with the third search condition to the fourth user terminal 40 (S470).

The fourth user terminal 40 purchases with a fee and pays for a specific problem and/or problem set using the information that coincides with the provided third search condition (S475).

The educational content management apparatus 100 distributes at least a part of sales profits (S480).

The educational content management apparatus 100 may distribute at least parts of sales profits to users who are related to the problems and/or the problem sets that are sold by the fourth user terminal 40.

Specifically, in the case where the fourth user terminal 40 purchases the first problem set, the educational content management apparatus 100 distributes at least parts of sales profits for the first problem set to the user of the second user terminal 20 that has transmitted the designation signal for constructing the first problem set and the users who have transmitted the data for constructing the problems included in the first problem set. Since the first problem is included in the first problem set, the user of the first user terminal 10 receives at least a part of the distributed sales profits for the first problem set through distribution.

At least a part of the sales profits for the first problem set may be distributed to the manager.

The total sum of the profit that is distributed to the manager and profits that are distributed to the first user terminal 10, the second user, and other users who have input the problems included in the first problem set should not exceed the sales profits for the first problem set.

The educational content management apparatus 100 may distribute the profits that occur due to the purchase of the problem set and/or the problem set library using infinite geometric sequence.

In the educational content management method according to this embodiment, a user who has transmitted the data that constructs the problem (e.g., user of the first user terminal 10) has rights to receive at least a part of the distributed sales profits for the transmitted problem (e.g., first problem), the problem set that includes the transmitted problem (e.g., first problem set or second problem set), and/or the problem set library that includes the problem set including the transmitted problem, and the rights are called primary rights.

Further, in the educational content management method according to this embodiment, a user who has transmitted the designation signal for constructing the problem set (e.g., user of the second user terminal 20 or user of the third user terminal 30) has rights to receive at least a part of the distributed sales profits for the created problem set that is created through transmission of the designation signal (e.g., first problem set or second problem set) and/or the problem set library that includes the problem set, and the rights are called secondary rights.

That is, the user who has input the data that constructs the problem has the primary rights. The user who has created the problem set using the problem in which the user having the primary rights exists has the secondary rights to the generated problem set. The user who has created the problem set library using the problem set in which the user having the secondary rights exists has ternary rights to the generated problem set library.

The user who has created the problem set using the problem set in which the user having the secondary rights exists and the problem in which the user having the primary rights exists, may have the secondary rights to a portion using the problem in which the user having the primary rights exists, and may have the ternary rights to a portion using the problem set in which the user having the secondary rights exists.

The user who has created a new problem set or a new problem set library using the problem set or problem set library in which the user having the ternary rights exists, has forgery rights to the new problem set or problem set library generated as above.

The educational content management apparatus 100 may set a profit distribution ratio on the basis of the degree of order of the rights.

Specifically, in the case where the first user terminal 10 has transmitted first to 100th problems (specifically, data that constructs the problems) to the educational content management apparatus 100, the user who has input the problems through the first user terminal 10 (hereinafter referred to as the "user of the first user terminal 10") has the primary rights to the first to 100th problems.

In the case where the second user terminal 20 has transmitted the designation signal for creating the first problem set that includes first to 80th problems, the user who has transmitted the designation signal (hereinafter referred to as the "user of the second user terminal 20") in order to create the problem set through the second user terminal 20 has the secondary rights to the first problem set, and the user of the first user terminal 10 has the primary rights to the first problem set.

In the case where the third user has transmitted the designation signal for creating the second problem set that includes 90 problems in total through selection of 30 problems in the first problem set and selection of 60 problems in the problems transmitted by the first user terminal 10, the user of the third user terminal 30 has the ternary rights since the user of the third user terminal 30 uses the first problem set in which the user of the second user terminal 20, who is the user having the secondary rights to the 30 problems selected from the first problem set, exists. Further, the user of the third user terminal 30 has the secondary rights since the user of the third user terminal 30 uses the problem in which the first user terminal 10 having the primary rights to the 60 problems selected from the problems transmitted by the first user terminal exists.

A case where a selling price for one problem is 10 won, and the profit distribution unit 160 distributes a profit of 50% of the selling price to the user who has the primary rights, a profit of 25% of the selling price to the user who has the secondary rights, and a profit of 12.5% of the selling price to the user who has the ternary rights will be exemplarily described.

If the fourth user terminal 40 purchases first to fifth problems through payment of 500 won (= 10 won × 50) through the payment unit 150, the profit distribution unit 160 may distribute 250 won, which is 50% of the sales profits (500 won that is paid by the fourth user terminal 40), to the user of the first user terminal 10, who has the primary rights to the purchased problems. The profit distribution unit 160 may distribute 250 won, which is the remaining 50% of the sales profits, to the manager.

If the fourth user terminal 40 purchases the first problem set through payment of 800 won (= 10 won × 80) through the payment unit 150, the profit distribution unit 160 may distribute 400 won, which is 50% of the sales profits (800 won that is paid by the fourth user terminal 40), to the user of the first user terminal 10, who has the primary rights to the purchased problems. Further, the profit distribution unit 160 may distribute 200 won, which is 25% of the sales profits, to the user of the second user terminal 20, who has the secondary rights to the purchased problems. The profit distribution unit 160 may distribute 200 won, which is the remaining 25% of the sales profits, to the manager

If the fourth user terminal 40 purchases the second problem set through payment of 900 won (= 10 won × 90) through the payment unit 150, the profit distribution unit 160 may distribute 450 won, which is 50% of the sales profits (900 won that is paid by the fourth user terminal 40), to the user of the first user terminal 10, who has the primary rights to the purchased problems. Further, the profit distribution unit 160 may distribute 75 won (= 10 won × 30 problems × 0.25), which is 25% of the sales profits that corresponds to 30 problems, to the user of the second user terminal 20, who has the secondary rights to the purchased 30 problems. Further, the profit distribution unit 160 may distribute 38 won (although 10 won × 30 problems × 0.125 = 37.5, the distributed profits may be set by rounding off, cutting away, or rounding one place of decimals according to settings), which is 12.5% of the profits that corresponds to 30 problems, to the user of the third user terminal 30, who has the ternary rights to the 30 problems. In this embodiment, the distributed profits are set through rounding off). Further, the profit distribution unit 160 may distribute 150 won (= 10 won × 60 problems × 0.25), which is 25% of the profits that corresponds to 60 problems, to the user of the third user terminal 30, who has the secondary rights to the 60 problems. Further, the profit distribution unit 160 may distribute 187 won (= 900 won - 450 won - 75 won - 38 won - 150 won), which is the remaining profits after distribution to the first user terminal 10, the second user terminal 20, and the third user terminal 30, to the manager.

That is, a specific user who has created specific educational content, such as a problem, a problem set, or a problem set library, takes at least a part of the rights to the profits that occur through selling of the educational content. Further, another specific user, who has created another specific educational content that is used to create the specific educational content, takes at least a part of the rights to the profits that occur through selling of the specific educational content.

Such rights and profit distribution according to the rights can be understood through the above-described example.

As another example that is different from the above-described example for additional explanation, a specific user A has created problems as specific educational content. If the specific user A has created problems using an image or a moving image, which is another specific educational content that is created by another specific user B in the process of creating problems, the other specific user B can take at least a part of the rights to the profits that occur through selling of the problems created by the specific user A. In this case, the specific user B may be a primary rightful person, and the specific user A may be a secondary rightful person.

The above-described case where the profit distribution unit 160 distributes a profit of 50% of the selling price to a user having the primary rights, a profit of 25% of the selling price to a user having the secondary rights, and a profit of 12.5% of the selling price to a user having the ternary rights corresponds to an example in which profit distribution is set using infinite geometric sequence.

The infinite geometric sequence means a sequence of the form $\{a, ar, ar^2, ar^3, ..., ar^{n-1}, ...\}$, where a first term is a, and a common ratio is r. In the educational content management method according to an embodiment of the present invention, a may be set as sales profits, and r may be set to 1/2. Further, ar may be set as a profit that is distributed to a user having the primary rights, $ar^2$ may be set as a profit that is distributed to a user having the secondary rights, and $ar^3$ may be set as a profit that is distributed to a user having the ternary rights.

The sum of infinite geometric series is as in mathematical expression 1 below.

[Mathematical Expression 1]

$$\frac{a}{1-r}$$

With reference to the sum of the infinite series according to mathematical expression 1, the sum of profits that are distributed to users having primary to n-order rights is as in mathematical expression 2 below.

[Mathematical Expression 2]

$$\frac{a}{1-r} - a$$

Here, in the case where r is 1/2, and a is sales profits, the sum of the profits that are distributed to users having primary to n-order rights should not exceed the sales profits. Accordingly, the profit distribution unit 160 can prevent the profits that exceed the sales profits from being distributed to the users having the primary to n-order rights.

However, setting of the ratio of the distributed profits using the infinite geometric sequence is merely exemplary, and various distribution methods may be applied. For example, the profit distribution unit 160 may operate so that even a user having lower rights than a user having the primary rights can take the distributed profit having a higher ratio than that of the user having the primary rights.

Referring to FIGS. 2 to 4, if an input for creating a problem set is received from a user who creates the problem set, the problem set receiving unit 130 may calculate the degree of order of the rights for problems included in the problem set to be created according to information on problems used to create the problem set and/or the used problem set. The providing unit 180 may provide information on the degree of order of the rights for the calculated problems to a user who inputs a designation signal for constructing the problem set.

In the same manner, if an input for creating a problem set library is received from a user who creates the problem set library, the problem set library receiving unit 140 may also calculate the degree of order of the rights for problems included in the problem set library to be created according to information on problems used to create the problem set library, used problem set, and/or the used problem set library. The providing unit 180 may provide information on the degree of order of the rights for the calculated problems to a user who inputs a designation signal for constructing the problem set library.

Referring again to FIG. 2, the educational content management apparatus 100 according to an embodiment of the present disclosure may further include a duplication determination unit (not illustrated) configured to determine whether the problem, the problem set, and/or the problem set library that are received by the problem receiving unit 110, the problem set receiving unit 130, and/or the problem set library receiving unit 140 are the same problem, the same problem set, and/or the same problem set library that have already been input and stored.

However, the duplication determination unit is not an essential configuration of the present invention. Even if it is not determined whether the duplicate problem, duplicate problem set, and/or duplicate problem set library exist, information on input time of each problem, problem set, and/or problem set library exist, and thus when the duplicate problem occurs, it may be solved through redistribution of the profits or contracts between persons concerned as schemes for protecting a person having preferential rights on the basis of the input time.

Further, even if the duplication is not prevented, the profit of the user having the primary rights to input the problem due to the creation of the duplicate problem set and/or duplicate problem set library can be improved. Further, the primary rights can seek larger profits than those of the rights having a different degree of order. Accordingly, creation of problems that correspond to the most basic content and input activation can be sought.

In the educational content management method, the detailed example of distribution of the sales profits is not presented with respect to the problem set library. However, the explanation related to the distribution of the sales profits of the problems and problem sets and the detailed example as described above may also be applied to the problem set library.

Further, in the educational content management method, problems, problem sets, and problem set libraries have been described, but the concept of a problem set library book that includes two or more problem set libraries may also be included therein. It will be apparent from the process of distributing amounts according to the problem set selling that the profit distribution unit 160 distributes the amounts according to the selling of the problem set library book.

According to the educational content management apparatus and method according to embodiments of the present invention, separately from the copyrights, profits according to efforts and time that are put by users who have created problems and have selected good problems can be distributed, and activation of educational content in quality and quantity can be sought.

Specifically, according to the educational content management apparatus and method according to embodiments of the present invention, users who have input specific problems can easily acquire various rights, such as rights to obtain distributed profits for the specific problems. Further, management of users who have rights to specific problems can be easily performed.

Further, according to the educational content management apparatus and method according to embodiments of the present invention, a problem set that is composed of parts of input problems can be easily created, and various rights, such as rights to obtain distributed profits for the created problem set, can be easily acquired and managed.

Further, according to the educational content management apparatus and method according to embodiments of the present invention, a user who has input a specific problem can take at least a part of profits that have occurred due to purchase of the specific problem, and thus it becomes possible to activate creation of various new problems.

Further, according to the educational content management apparatus and method according to embodiments of the present invention, profits that have occurred due to purchase of a problem set that is composed of parts of input problems can be distributed between a user who has input the parts of the problems and a user who has created the problem set, and thus it becomes possible to achieve problem creation activation, problem verification effects, and good problem selection.

As described above, the educational content management method may be implemented as a computer readable code in a computer readable recording medium.

That is, a recording medium that implements the educational content management method according to the present invention may include a program for performing receiving an input for creating a first problem set that includes at least one problem input by a first user terminal 10 from a second user terminal 20, and distributing at least a part of sales profits of the first problem set to the first user terminal 10 and the second user terminal 20.

The computer readable recording medium includes all kinds of recording devices in which data that can be read by a computer system is stored. Examples of the computer readable recording mediums may include a ROM, a RAM, a CD-ROM, a magnetic tape, a floppy disk, and optical data storage device, and may be implemented in the form of transmission through the Internet and carrier waves.

Further, the computer readable recording medium may store and execute codes which are distributed in the computer system that is connected to a network and can be read by a computer in a distribution method. Further, the functional program, code, and code segments for implementing the recording method may be easily derived by programmers in the technical fields to which the present invention pertains.

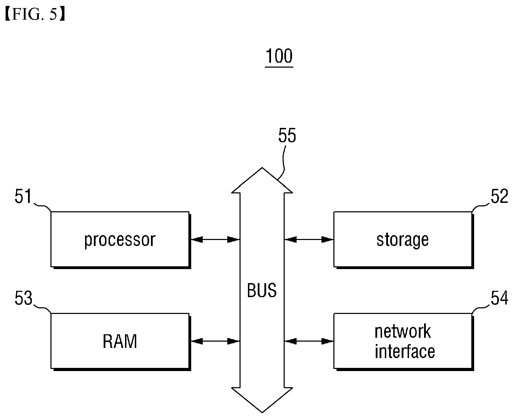

FIG. 5 is a diagram illustrating the configuration of an educational content management apparatus that is different from the configuration of FIG. 2.

The educational content management apparatus 100 according to another embodiment of the present invention may have the configuration as illustrated in FIG. 5. The educational content management apparatus 100 according to this embodiment may include a processor 51 configured to perform a command, a storage 52 in which an educational content management computer program code is stored, a memory 53, such as a RAM, a network interface 54 configured to transmit/receive data to/from an external device, and a data bus 55 that serves as a data movement path. The educational content management computer program code according to embodiments of the present invention may be stored in the storage 52, may be loaded onto the memory 53, and then may be executed by the processor 51.

Although preferred embodiments of the present invention have been described for illustrative purposes, those skilled in the art will appreciate that various modifications, additions and substitutions are possible, without departing from the scope and spirit of the invention as disclosed in the accompanying claims.

[Explanation of reference numerals]

100: educational content management apparatus

110: problem receiving unit

120: storage unit

130: problem set receiving unit

140: library receiving unit

150: payment unit

160: profit distribution unit

170: search condition receiving unit

180: providing unit

**Claims**

1. An educational content management apparatus comprising:

   a problem receiving unit configured to receive data that constructs a first problem from a terminal of a first user, and to receive data that constructs a second problem from a terminal of a second user;
   a problem set receiving unit configured to receive a designation signal for constructing a first problem set that includes the first problem and the second problem from a terminal of a third user; and
   a profit distribution unit configured to distribute at least parts of sales profits of the first problem set to the first user, the second user, and the third user.

2. The educational content management apparatus of claim 1, wherein the problem set receiving unit receives a designation signal for constructing a second problem set that includes at least a part of the first problem set from a terminal of a fourth user, and
   the profit distribution unit distributes at least parts of sales profits of the second problem set to the first user, the second user, the third user, and the fourth user.

3. The educational content management apparatus of claim 2, further comprising a library receiving unit configured to receive a designation signal for constructing a problem set library that includes the first problem set and the second problem set from a fifth user,
   wherein the profit distribution unit distributes at least parts of sales profits of the problem set library to the first user, the second user, the third user, the fourth user, and the fifth user.

4. The educational content management apparatus of claim 1, wherein the problem receiving unit receives data that constructs a solution of the first problem from a terminal of a sixth user, and
   if the data that constructs the solution of the first problem is included in the first problem set, the profit distribution unit distributes at least parts of the sales profits of the problem set to the first user, the second user, the third user, the fourth user, and the sixth user.

5. The educational content management apparatus of claim 1, further comprising:

   a storage unit configured to store the data that constructs the problem that is received by the problem receiving unit;
   a search condition receiving unit configured to receive an input of a search condition from a specific user; and
   a providing unit configured to provide information that coincides with the input search condition among the data that constructs the problem that is stored in the storage unit to a terminal of the specific user.

6. The educational content management apparatus of claim 5, wherein the providing unit provides an interface that can create a problem set through selection of a part of a problem that coincides with the search condition to the specific user.

7. The educational content management apparatus of claim 5, wherein the storage unit further stores information on a time when the data that constructs the problem is received and information on a user who has sent the data that constructs the problem.

8. The educational content management apparatus of claim 1, further comprising a providing unit configured to provide a whole or a part of the problems included in the first problem set to a terminal of a user who has requested a preview in the case where the preview is requested before the first problem set is sold.

9. The educational content management apparatus of claim 1, wherein the profit distribution unit distributes at least parts of the sales profits to the first user, the second user, and the third user using an infinite geometric sequence.

10. The educational content management apparatus of claim 1, wherein the first problem comprises at least one of an image and a moving image that are generated by a terminal of a seventh user, and

if sales profits of at least one of the first problem and the first problem set occur, the profit distribution unit distributes at least a part of the sales profits to the seventh user.

11. The educational content management apparatus of claim 4, wherein the solution of the first problem comprises at least one of an image and a moving image that are created by a terminal of a seventh user, and the profit distribution unit distributes at least a part of the sales profits of the first problem set to the first user, the second user, the third user, the fourth user, and the seventh user.

12. An educational content management apparatus comprising:

a problem receiving unit configured to receive data that constructs two or more problems from a terminal of a first user;
a problem set receiving unit configured to receive a designation signal for constructing a first problem set that includes at least two problems among the two or more problems from a terminal of a second user; and
a profit distribution unit configured to distribute at least parts of sales profits of the first problem set to the first user and the second user.

13. The educational content management apparatus of claim 12, wherein the problem set receiving unit receives a designation signal for constructing a second problem set that includes at least a part of the first problem set from a terminal of a third user, and the profit distribution unit distributes at least parts of sales profits of the second problem set to the first user, the second user, and the third user.

14. The educational content management apparatus of claim 13, further comprising a library receiving unit configured to receive a designation signal for constructing a problem set library that includes the first problem set and the second problem set from a fourth user,
wherein the profit distribution unit distributes at least parts of sales profits of the problem set library to the first user, the second user, the third user, and the fourth user.

15. The educational content management apparatus of claim 12, wherein the profit distribution unit distributes at least parts of the sales profits to the first user, the second user, and the third user using an infinite geometric sequence.

16. An educational content management method comprising:

inputting problems by receiving data that constructs a first problem from a terminal of a first user and receiving data that constructs a second problem from a terminal of a second user;
inputting a problem set by receiving a designation signal for constructing a first problem set that includes the first problem and the second problem from a terminal of a third user; and
distributing profits by distributing at least parts of sales profits of the first problem set to the first user, the second user, and the third user.

17. The educational content management method of claim 16, wherein the inputting a problem set receives a designation signal for constructing a second problem set that includes at least a part of the first problem set from a terminal of a fourth user, and the distributing profits distributes at least parts of sales profits of the second problem set to the first user, the second user, the third user, and the fourth user.

18. The educational content management method of claim 17, further comprising inputting a library by receiving a designation signal for constructing a problem set library that includes the first problem set and the second problem set from a fifth user, wherein the distributing profits distributes at least parts of sales profits of the problem set library to the first user, the second user, the third user, the fourth user, and the fifth user.

19. An educational content management method comprising:

inputting problems by receiving data that constructs two or more problems from a terminal of a first user;
inputting a problem set by receiving a designation signal for constructing a first problem set that includes at least two problems among the two or more problems from a terminal of a second user; and
distributing profits by distributing at least parts of sales profits of the first problem set to the first user and the second user.

20. The educational content management method of claim 19, wherein the inputting a problem set further receives a designation signal for constructing a second problem set that includes at least a part of the first problem set from a terminal of a third user, and the distributing profits distributes at least parts of sales profits of the second problem set to the first user, the second user, and the third user.

21. The educational content management method of claim 20, further comprising inputting a library by receiving a designation signal for constructing a problem set library that includes the first problem set and the second problem set from a fourth user, wherein the distributing profits distributes at least parts of sales profits of the problem set library to the first user, the second user, the third user, and the fourth user.

22. The educational content management method of claim 19, wherein the distributing profits distributes at least parts of the sales profits to the first user, the second user, and the third user using an infinite geometric sequence.

23. The educational content management method of claim 19, wherein the inputting problems receives data that constructs a solution of the first problem from a terminal of a sixth user, and if the data that constructs the solution of the first problem is included in the first problem set, the distributing profits distributes at least parts of the sales profits of the problem set to the first user, the second user, the third user, the fourth user, and the sixth user.

24. The educational content management method of claim 19, further comprising:

storing the data that constructs the problem that is received through the receiving problems; receiving a search condition by receiving an input of the search condition from a specific user; and providing information, which coincides with the input search condition of the data that constructs the problem that is stored through the storing, to a terminal of the specific user.

25. The educational content management method of claim 24, wherein the providing provides an interface that can create a problem set through selection of a part of a problem that coincides with the search condition to the specific user.

26. The educational content management method of claim 24, wherein the storing further stores information on a time when the data that constructs the problem is received and information on a user who has sent the data that constructs the problem.

27. The educational content management method of claim 19, further comprising providing a whole or a part of the problems included in the first problem set to a terminal of a user who has requested a preview in the case where the preview is requested before the first problem set is sold.

28. The educational content management method of claim 19, wherein the distributing profits distributes at least parts of the sales profits to the first user, the second user, and the third user using an infinite geometric sequence.

29. The educational content management method of claim 19, wherein the first problem comprises at least one of an image and a moving image that are generated by a terminal of a seventh user, and if sales profits of at least one of the first problem and the first problem set occur, the distributing profits distributes at least a part of the sales profits to the seventh user.

30. The educational content management method of claim 23, wherein the solution of the first problem comprises at least one of an image and a moving image that are created by a terminal of a seventh user, and the distributing profits distributes at least a part of the sales profits of the first problem set to the first user, the second user, the third user, the fourth user, and the seventh user.

31. A computer readable recording medium recorded with a computer program that performs the method defined in any one of claims 19 to 30.

【FIG. 1】

first user terminal (10)

second user terminal (20)

third user terminal (30)

100

fourth user terminal (40)

fifth user terminal (50)

sixth user terminal (60)

【FIG. 2】

【FIG. 3】

【FIG. 4】

| 10 | 20 | 100 | 30 | 40 |

request problem input ——— S405

provide interface corresponding
to problem input request ——— S410

input first problem ——— S415

S420

receive and store first problem

transmit first search
condition ——— S425

provide result that coincides
with first search condition ——— S430

create first problem
set using provided
result ——— S435

S440

store generated first problem set

transmit second
S445 ——— search condition

provide result that coincides
S450 ——— with second search condition

create second problem
S455 ——— set using provided result

S460

store generated second problem set

S465 ——— transmit third search condition

provide result that coincides
S470 ——— with third search condition

S475 ——— purchase using provided result

S480

distribute profits that occur due to purchase

【FIG. 5】

100

55

51 processor

52 storage

BUS

53 RAM

54 network interface

## INTERNATIONAL SEARCH REPORT

| International application No. |
| --- |
| **PCT/KR2015/005944** |

**A. CLASSIFICATION OF SUBJECT MATTER**

***G06Q 50/20(2012.01)i***

According to International Patent Classification (IPC) or to both national classification and IPC

**B. FIELDS SEARCHED**

Minimum documentation searched (classification system followed by classification symbols)
G06Q 50/20; G06Q 50/10; G06Q 50/30; G06Q 30/06; G06Q 30/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: contents, problem, list, set, profit, distribution, sell, writing, enrollment

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2014-0044613 A (HONG, Hee Dong et al.) 15 April 2014<br>See abstract and claim 1. | 1-31 |
| Y | KR 10-2011-0005932 A (NULLY CO., LTD.) 20 January 2011<br>See claims 1-3 and paragraphs [0043], [0045], [0098]. | 1-31 |
| Y | KR 10-2010-0079748 A (NHN CORP.) 08 July 2010<br>See claim 1 and paragraphs [0053], [0054]. | 1-31 |
| A | KR 10-2012-0117633 A (BLUEPIN CO., LTD.) 24 October 2012<br>See claim 1 and paragraph [0035]. | 1-31 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 16 JULY 2015 (16.07.2015) | **16 JULY 2015 (16.07.2015)** |

| Name and mailing address of the ISA/**KR** | Authorized officer |
| --- | --- |
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/005944**

| Patent document cited in search report | Publication date | Patent family member | Publication date |
|---|---|---|---|
| KR 10-2014-0044613 A | 15/04/2014 | NONE | |
| KR 10-2011-0005932 A | 20/01/2011 | NONE | |
| KR 10-2010-0079748 A | 08/07/2010 | NONE | |
| KR 10-2012-0117633 A | 24/10/2012 | KR 10-2012-0117610 A<br>WO 2012-141426 A2<br>WO 2012-141426 A3 | 24/10/2012<br>18/10/2012<br>10/01/2013 |

Form PCT/ISA/210 (patent family annex) (July 2009)